# EUROPÄISCHE PATENTSCHRIFT

(11) **EP 3 105 197 B1**
(45) Veröffentlichungstag und Bekanntmachung des Hinweises auf die Patenterteilung: **13.09.2017**
(21) Anmeldenummer: 15703270.7
(22) Anmeldetag: 04.02.2015
(51) Int. Cl.: F16L 59/02, F16L 59/04, B32B 18/00, C04B 35/52, C04B 35/83, C04B 37/00

(54) **VERFAHREN ZUM HERSTELLEN EINES MODULAREN ISOLATIONSELEMENTES**
METHOD FOR PRODUCING A MODULAR INSULATION ELEMENT
PROCÉDÉ DE PRODUCTION D'UN ÉLÉMENT D'ISOLATION MODULAIRE

(30) Priorität: 10.02.2014 DE 102014101589
(43) Veröffentlichungstag der Anmeldung: 21.12.2016
(73) Patentinhaber: Nippon Kornmeyer Carbon Group GmbH, 53578 Windhagen (DE)
(72) Erfinder: KORNMEYER, Torsten, 53639 Königswinter (DE)
(74) Vertreter: Lippert Stachow Patentanwälte Rechtsanwälte
(86) Internationale Anmeldenummer: PCT/EP2015/052314
(87) Internationale Veröffentlichungsnummer: WO 2015/118018

(56) Entgegenhaltungen:
- FR-A1- 2 921 860
- US-A- 3 616 045

## Beschreibung

Die Erfindung betrifft ein Verfahren zum Herstellen eines modularen Isolationselementes aus Kohlenstoff-Werkstoffen, bestehend aus zwei in einem Abstand zueinander angeordneten und plattenförmigen, runden oder ineinander gesteckten rohrförmigen Graphit- oder CFC-Elementen.

An sich sind übliche Graphitmaterialien als Isolationsmaterial wenig geeignet, da die Wärmeleitfähigkeit mit 50 - 150 W/mK recht hoch ist. Das bedeutet, dass für die Verwendung von Graphitplatten als Isolationselelemente Maßnahmen getroffen werden müssen, um die Wärmeleitfähigkeit zu reduzieren. Das kann einerseits durch entsprechende Beeinflussung der verwendeten Materialien, oder andererseits durch Verbundmaterialen erreicht werden.

So wird in der DE 10 2011 007 075 A1 ein graphitierter Kohlenstoff-Formkörper geringer Wärmeleitfähigkeit und ein Verfahren zu dessen Herstellung beschrieben. Ein solcher Formkörper wird beispielsweise durch Gießen eines mit sinteraktivem Kohlenstoff mit einer Partikelgröße von weniger als 3 µm und einem Dispergiermittel vorgemischten Schlicker in eine Gipsgießform hergestellt (Schlicker: Das ist eine flüssige, breiige bis zähflüssige Masse).

Durch die Saugwirkung der Gipsform erfolgt bereits eine Verdichtung des Grünlings. Anschließend wird der Grünling aus der Gipsform entnommen, getrocknet und bei einer Temperatur zwischen 600 - 1.500 °C karbonisiert und danach bei 2.800 °C graphitiert. Auf diese Weise lässt sich ein Kohlenstoff-Formkörper mit einer Wärmeleitfähigkeit von deutlich weniger als 35 W/mK herstellen.

Aus der DE 10 2020 030 474 A1 geht ein durch ein Pulver-Prepreg-Verfahren hergestellter und mit Karbonfasern verstärkter (CFC-) Formkörper hervor. Dazu wird auf mindestens einer Seite einer Gewebelage aus einem wenigstens 49 Gew.-% Kohlenstoff enthaltenden Material ein pulverförmiger Kohlenstoff-Matrixvorläufer aufgebracht, der einen Thermoplast oder ein Duroplast-Prepolymer enthält. Anschließend wird durch eine Wärmebehandlung ein Prepreg hergestellt, wonach mehrere Prepregs übereinander laminiert werden und durch Pressen bei einer Vernetzungstemperatur ein Grünkörper hergestellt wird. Dieser Grünkörper wird nachfolgend bei einer Temperatur von wenigstens 400 °C carbonisiert.

In der DE 10 2012 204 345 A1 wird ein ähnlicher faserverstärkter Verbundwerkstoff aus Graphit- oder Carbonfasern mit zwei Flachseiten beschrieben, bei dem die Faserstruktur mit einem Matrixmaterial imprägniert ist, welches wenigstens einen Thermoplasten enthält. Eine der Flachseiten zeigt eine profilierte Oberfläche, wodurch eine verbesserte Stapelbarkeit erreicht werden soll, indem beim Zusammenpressen der Lagen zu einem Laminat die dazwischen befindliche Luft gleichmäßig entfernt wird, so dass Lufteinschlüsse vermieden werden können.

Aus diesen Materialien können Isolationselemente mit einer Sandwichstruktur hergestellt werden. Das bedeutet, dass ein plattenförmiger Kernkörper, also ein Kohlenstoff-Formkörper, ein CFC-Formkörper, ein Laminat oder eine Hart- oder Weichfilzplatte auf mindestens eine der beiden Flachseiten jeweils eine stabilisierende Graphit- oder CFC-Platte auflaminiert wird. Weitere Beschichtungen der Isolationsplatte zum Erosionsschutz, Reflektionsschutz, o. dgl. sind möglich.

Bei solchen Isolationselementen ist deren Kernschicht für die Wärmeleitfähigkeit, d.h. den Isolationsgrad, maßgeblich.

Die FR 2 921 860 A1 offenbart ein Verfahren zum Herstellen eines modularen Isolationselementes aus Kohlenstoff-Werkstoffen für die Verwendung zur Auskleidung von thermischen Prozesseinrichtungen, wie Hochtemperaturöfen. Die Isolationselemente bestehen aus zwei in einem Abstand zueinander angeordneten und ineinander gesteckten rohrförmigen Graphitelementen, mit einem den Zwischenraum ausfüllenden Isolationselement aus Ruß. Das Isolationselement kann als Sandwichstruktur ausgebildet sein und kann einer thermischen Nachbehandlung unterzogen werden.

Schließlich geht aus der US 3 616 045 A ein Isolationselement aus zwei im Abstand zueinander angeordneten Graphitelementen hervor, zwischen denen ein Isolationsmaterial angeordnet ist. Das Isolationsmaterial kann Ruß und ein Furfurylalkoholharz enthalten und wird mit einer Flüssigkeit zur Ausbildung eines Schlickers gemischt, um einen Grünling herzustellen. Dieser Grünling wird anschließend zwischen den Graphitelementen ausgehärtet und zur Bildung einer Sandwichstruktur thermisch ausgehärtet.

Der Erfindung liegt daher die Aufgabe zugrunde, ein modulares Isolationselement aus Kohlenstoff-Werkstoffen mit geringer Wärmeleitfähigkeit, zu schaffen, welches besonders kostengünstig hergestellt werden kann und dass eine vergrößerte Standzeit aufweist.

Die der Erfindung zugrunde liegende Aufgabe wird bei einem Verfahren zum Herstellen eines modularen Isolationselementes aus Kohlenstoff-Werkstoffen, bestehend aus zwei in einem Abstand zueinander angeordneten, plattenförmigen, runden oder ineinander gesteckten rohrförmigen Graphit- oder CFC-Elementen, dadurch gelöst, dass der Zwischenraum zwischen den Graphit- oder CFC-Elementen mit einem thermisch isolierenden Kernelement ausgefüllt wird, wobei das Kernelement aus einem mit Rußpartikeln angereicherten Weich- oder Hartfilz aus Graphit- oder CFC-Fasern hergestellt wurd, indem die Rußpartikel in den Filz eingespült werden und der Filz anschließend separat oder zwischen den Graphit- oder CFC-Elementen einer Wärmebehandlung zur Herstellung eines Isolationselementes mit einer Sandwichstruktur unterzogen wird.

In einer Fortführung der Erfindung wird dem Ruß beim Einfüllen in die Pressform, oder zwischen die Graphit- oder CFC-Elemente, ein organisches oder anorganisches Bindemittel beigemischt.

Schließlich kann das Isolationselement einer thermischen Nachbehandlung unterzogen werden, um eine feste Sandwichstruktur auszubilden.

Weiterhin kann das fertiggestellte Isolationselement mindestens einseitig mit Beschichtungen zum Erosionsschutz oder zum Reflektionsschutz versehen werden.

Das nach dem erfindungsgemäßen Verfahren hergestellte modulare Isolationselement lässt sich besonders vorteilhaft zur Auskleidung von thermischen Prozesseinrichtungen, wie Temperöfen, Glühöfen, Beschichtungsanlagen, oder von anderen im Hochtemperaturbereich betriebenen Prozesseinrichtungen verwenden.

Die Erfindung wird nachfolgend an einem Ausführungsbeispiel näher erläutert.

Das wesentliche Element eines erfindungsgemäßen Isolationselements, das eine plattenförmige, rechteckige, runde oder rohrförmige Form aufweisen kann, ist die Verwendung von größtenteils, oder ausschließlich Ruß als Isolations- bzw. Kernelement zwischen zwei Graphit- oder CFC-Elementen. Die Graphit- oder CFC-Elemente sind bei diesem Isolationselement die formgebenden Elemente. Es versteht sich, dass rohrförmige Isolationselemente aus Rohren mit unterschiedlichem Durchmesser bestehen müssen, um diese koaxial ineinander stecken zu können, so dass sich ein mit dem Kernelement befüllbarer Zwischenraum ergibt.
Dieses Material steht nahezu unbegrenzt als Abfallmaterial zur Verfügung und verfügt in Abhängigkeit vom Temperaturbereich über eine wesentlich höhere Isolationswirkung, die diejenige von den bekannten Maßnahmen um bis zu 100 % übersteigt.
Die Verwendung von Ruß für das Kernelement hat gegenüber einem herkömmlichen Isolationsmaterial erhebliche Vorteile, die darin bestehen, dass eine Kosteneinsparung von zumeist 50 % und mehr erreichbar ist, wobei die Reinheit der Module enorm verbessert ist und wobei bei einer prozessbedingten Kontamination oder Verschleiß das Kernelement einfach wechselbar ist, ohne die Module komplett erneuern zu müssen.
Weitere Vorteile sind darin zu sehen, dass die Wärmeleitfähigkeit des Isolationsmaterials Ruß halb so hoch ist wie die der bisher eingesetzten graphitierten Hart-/Weichfilze.
Weiterhin ist die Dichte geringer und außerdem ist Ruß absolut frei von Verunreinigungen mit Harz, Metallen etc. Hinzu kommt die Widerstandsfähigkeit gegen thermische und chemische Korrosion.
In einer nicht zur Erfindung gehörenden Variante kann das Kernelement durch Einbringen von Ruß zwischen die beiden Graphit- oder CFC-Elemente, bei gleichzeitiger Verdichtung hergestellt werden. Beispielsweise kann der Ruß in den Zwischenraum zwischen zwei koaxial zueinander angeordneten Rohren mit unterschiedlichem Durchmesser eingebracht werden, so dass ein Isolationsrohr mit einer Sandwichstruktur entsteht.

Alternativ besteht die Möglichkeit, das Kernelement durch isostatisches Pressen in einer Pressform vorzuverdichten und anschließend zwischen die beiden Graphit- oder CFC-Elemente einzubringen, um eine Sandwichstruktur auszubilden.

Weiterhin kann der Ruß vor dem Verdichten mit einem organischen Bindemittel, wie einem Thermoplastpulver oder einem mineralischen Bindemittel vermischt werden, das beispielsweise in einem nachfolgenden Schritt oder nach dem Einbringen zwischen die Graphit- oder CFC-Elemente, einer thermischen Behandlung unterzogen wird, um das Bindemittel auszuhärten oder zu vernetzen und um somit einen festen Verbund aus äußeren Graphit- oder CFC-Elementen mit dem Kernelement auszubilden.

Auch ist es durch Vermischung des Rußes mit einer Flüssigkeit zur Ausbildung eines Schlickers und nachfolgendes Einfüllen in eine Gipsform möglich, einen Grünling herzustellen, der anschließend zwischen den Graphit- oder CFC-Elementen thermisch ausgehärtet wird. Durch das Einfüllen in die Gipsform wird dem Schlicker Flüssigkeit entzogen, so dass eine gewisse Vorverdichtung eintritt.

Eine Möglichkeit entsprechend der Erfindung besteht darin, einen Weich- oder Hartfilz aus Graphit- oder CFC-Fasern mit Rußpartikeln anzureichern, indem die Rußpartikel beispielsweise in den Filz eingespült werden und der Filz anschließend separat oder zwischen den Graphit- oder CFC-Elementen einer Wärmebehandlung unterzogen wird.

Weiterhin kann das fertiggestellte Isolationselement mindestens einseitig mit Beschichtungen zum Erosionsschutz, zum Reflektionsschutz o. dgl. versehen werden.

Die Erfindungsgemäßen Isolationselemente bzw. Module können wie üblich zu größeren Isolationselementen zusammengesetzt werden, wobei wie üblich Hart- oder Weichfilz zur Abdichtung der Stoßstellen verwendet werden kann.

Es versteht sich, dass äußeren formgebenden Elemente des Isolationselementes auch aus anderen und auch aus unterschiedlichen Materialien bestehen können, sofern diese die geforderten thermischen Anforderungen und die sonstigen Prozessbedingungen erfüllen.

## Patentansprüche

1. Verfahren zum Herstellen eines modularen Isolationselementes aus Kohlenstoff-Werkstoffen, bestehend aus zwei in einem Abstand zueinander angeordneten und plattenförmigen, runden oder ineinander gesteckten rohrförmigen Graphit- oder CFC-Elementen, **dadurch gekennzeichnet, dass** der Zwischenraum zwischen den Graphit- oder CFC-Elementen mit einem thermisch isolierenden Kernelement ausgefüllt wird, wobei das Kernelement aus einem mit Rußpartikeln angereicherten Weich- oder Hartfilz aus Graphit- oder CFC-Fasern hergestellt wird, indem die Rußpartikel in den Filz eingespült werden und der Filz anschließend separat oder zwischen den Graphit- oder CFC-Elementen einer Wärmebehandlung zur Herstellung eines Isolationselementes mit einer Sandwichstruktur unterzogen wird.

2. Verfahren nach Anspruch 1, **dadurch gekennzeichnet, dass** dem Ruß ein organisches oder anorganisches Bindemittel beigefügt wird.

3. Verfahren nach Anspruch 1, **dadurch gekennzeichnet, dass** die Sandwichstruktur einer thermischen Nachbehandlung unterzogen wird, um eine feste Sandwichstruktur auszubilden.

4. Verfahren nach einem der Ansprüche 1 bis 3, **dadurch gekennzeichnet, dass** das fertiggestellte Isolationselement mindestens einseitig mit Beschichtungen zum Erosionsschutz, oder zum Reflektionsschutz versehen wird.

5. Verwendung des nach dem Verfahren nach den Ansprüchen 1 bis 4 hergestellten modularen Isolationselementes zur Auskleidung von thermischen Prozesseinrichtungen, wie Temperöfen, Glühöfen, Beschichtungsanlagen, oder von anderen im Hochtemperaturbereich betriebenen Prozesseinrichtungen.

## Claims

1. Method for producing a modular insulating element made of carbon materials, consisting of two spaced-apart and plate-shaped, circular or interplugged tubular graphite or CFC elements, **characterized in that** the space between the graphite or CFC elements is filled with a thermally insulating core element, the core element being produced from a soft or hard graphite-fibre or CFC-fibre felt which is enriched with carbon black particles, by washing of the carbon black particles into the felt, the felt being subsequently subjected separately or between the graphite or CFC elements to a heat treatment in order to produce an insulating element having a sandwich structure.

2. Method according to Claim 1, **characterized in that** an organic or inorganic binder is added to the carbon black.

3. Method according to Claim 1, **characterized in that** the sandwich structure is subjected to a thermal aftertreatment in order to form a solid sandwich structure.

4. Method according to any of Claims 1 to 3, **characterized in that** the completed insulating element is provided on at least one side with coatings for erosion protection, or for anti-reflection.

5. Use of the modular insulating element produced by the method according to Claims 1 to 4 for the lining of thermal processing equipment, such as heat treatment ovens, annealing furnaces, coating units, or other processing equipment operated in the high-temperature range.

## Revendications

1. Procédé de fabrication d'un élément d'isolation modulaire en matériaux carbonés, constitué par deux éléments en graphite ou CFC agencés à une distance l'un de l'autre et sous forme de plaques, ronds ou tubulaires emboîtés l'un dans l'autre, **caractérisé en ce que** l'espace intermédiaire entre les éléments en graphite ou CFC est rempli avec un élément de noyau isolant thermiquement, l'élément de noyau étant fabriqué à partir d'un feutre souple ou dur en fibres de graphite ou CFC enrichi avec des particules de noir de carbone, par introduction des particules de noir de carbone dans le feutre, puis soumission du feutre séparément ou entre les éléments en graphite ou CFC à un traitement thermique pour la fabrication d'un élément d'isolation à structure en sandwich.

2. Procédé selon la revendication 1, **caractérisé en ce qu'**un liant organique ou inorganique est ajouté au noir de carbone.

3. Procédé selon la revendication 1, **caractérisé en ce que** la structure en sandwich est soumise à un post-traitement thermique pour former une structure en sandwich solide.

4. Procédé selon l'une quelconque des revendications 1 à 3, **caractérisé en ce que** l'élément d'isolation fini est muni au moins sur un côté de revêtement pour la protection contre l'érosion ou pour la protection contre les reflets.

5. Utilisation de l'élément d'isolation modulaire fabriqué par le procédé selon les revendications 1 à 4 pour l'habillage de dispositifs de traitement thermique, tels que des fours d'étuvage, des fours de recuit, des unités de revêtement, ou d'autres dispositifs de traitement exploités dans une plage de température élevée.
